# EUROPEAN PATENT APPLICATION

(11) **EP 2 034 696 A1**
(43) Date of publication of application: **11.03.2009**
(21) Application number: 07291082.1
(22) Date of filing: 10.09.2007
(51) Int. Cl.: H04L 29/08

(54) **Storing a media asset in a streaming node of a media-on-demand network**

(71) Applicant: Alcatel Lucent, 75008 Paris (FR)
(72) Inventor: Kisel, Andrey, Maidenhead, Berkshire SL6 8DH (GB); Robinson, Dave Cecil, Aldbourne, Wiltshire SN8 2NP (GB); Robbertze, Max F, Reading, RG4 8AL (GB)
(74) Representative: Sarup, David Alexander

(57) **Abstract**

A method is provided of storing a media asset in a streaming node of a media-on-demand network. The network comprises a library node and at least one downstream streaming node. The method comprises: recording data of the number of requests from users for an asset over a time period; determining a popularity estimate for the asset dependent upon the recorded data; determining whether the popularity estimate exceeds a predetermined threshold; and upon the threshold being exceeded storing the asset in the streaming node for use in addressing a further request for the asset.

## Description

### Field of the Invention

The present invention relates to telecommunications systems, in particular to media-on-demand delivery systems.

### Description of the Related Art

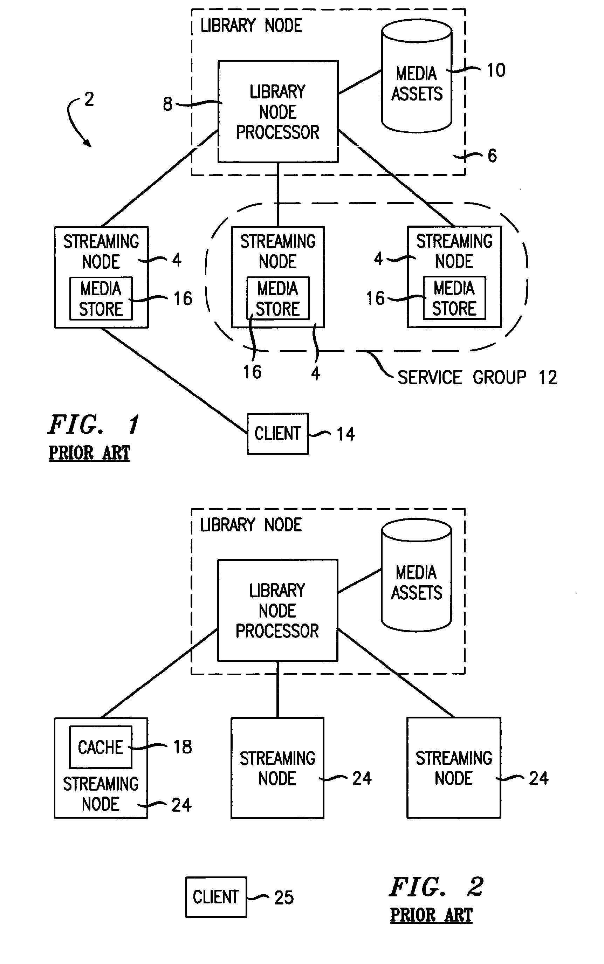

As shown in Figure 1, a known media-on-demand delivery network 2 consists of local media delivery nodes, denoted streaming nodes 4, connected to a central library node 6 which includes a processor 8 and a database 10 of media assets such as videos, for example films in digital signal format. The processor 8 is for handling the media assets stored in the database 10. For simplicity, only one library node 6 and a few streaming nodes 4 are shown in Figure 1.

The streaming node 4 is a node that serves requests for media-on-demand. The streaming node includes a media store 16 of a size that cannot store all media assets on offer to end users, but can store some of those media assets. One end user 14 is shown in Figure 1 for simplicity. The streaming node is usually located geographically close to end users, and is considered the preferred streaming node for nearby users.

The library node 6 is typically not located close to end users, and there are fewer streaming nodes 4 than library nodes 6. A streaming node cannot hold all of the media assets available in the library node. A system operator selects which assets to load on each streaming node.

A known approach to simplify asset loading is based upon considering streaming nodes in groups, known as service groups. One service group 12 is shown in Figure 1 for simplicity. The operator uses a scheduling method based on the availability of storage resource at the streaming nodes to decide and effect asset distribution to, or removal from, all the streaming nodes in the service group. Until distributed to the service group, a user request for a media asset is handled by the library node 6.

This approach requires operator involvement in organising and directing asset distribution to, and removal from, streaming nodes. For a large scale system with multiple streaming groups the time required to distribute an asset to all streaming nodes in appropriate streaming groups can be large. Another limitation is that the operator might mistakenly load content of low predicted popularity onto streaming nodes.

Turning now to Figure 2, another known solution is to cache the media asset in a cache memory 18 in the streaming node 24 that is preferred, e.g. closest to, a particular end user who requests a service. This caching is storing the media asset as it is delivered in real time from the library node to the end user, in other words as it is "streaming through". This cached media asset is then used when another request for the media asset or a part thereof is received by the streaming node from another nearby end user 25.

This second known approach puts extra load on the streaming node, which may unnecessarily cache an asset that is not re-requested before being removed from cache memory, because the cache memory is relatively small. The asset is only to then be re-requested involving a fresh delivery from the library node and caching operation. This situation, that a cached asset is not reused, is more likely for low and medium popularity assets. For example, consider a library node with 1000 assets and apply an 10/90 rule, in other words, up to 90% of customers request less than 10% of the media assets. If the remaining 90% (900) of the assets have say an equal but low probability of being requested, the probability of the assets being held in the cache at the streaming node long enough to receive a second request is small due to limited cache size.

### Summary of the Invention

The reader is referred to the appended independent claims. Some preferred features are laid out in the dependent claims.

An example of the present invention is a method of storing a media asset in a streaming node of a media-on-demand network. The network comprises a library node and at least one downstream streaming node. The method comprises:
recording data of the number of requests from users for an asset over a time period; determining a popularity estimate for the asset from the recorded data; determining whether the popularity estimate exceeds a predetermined threshold; and upon the threshold being exceeded storing the asset in the streaming node for use in addressing a further request for the asset.

In consequence, less popular assets are provided to the user from the library node whilst more popular assets are additionally stored downstream at the streaming node for easier download to a user in response to a further request for that asset from a user near the streaming node. This process can be automatic, and can be self-adaptive as asset popularity changes.

Preferred embodiments of the invention enable storage of the asset to be shifted to those streaming nodes selected as being from which that asset is likely to be requested. This enables more asset requests to be served at a time than if streaming from the library node were required to a greater extent. Mere caching at streaming nodes without subsequent reuse of that cached asset can be reduced or eliminated. Also, library nodes need be less involved in addressing individual asset requests. Should a streaming node go out of service, the network self-adapts in that assets determined as sufficiently popular are instead moved to neighbouring streaming nodes so to meet demand of nearby users.

The media can be video.

### Brief Description of the Drawings

Embodiments of the present invention will now be described by way of example and with reference to the drawings, in which:
Figure 1 is a diagram illustrating a known media-on-demand network (PRIOR ART),
Figure 2 is a diagram illustrating another known media-on-demand network (PRIOR ART),
   Figure 3 is a diagram illustrating a media-on-demand network according to a first embodiment of the present invention,
   Figure 4 is a sequence diagram illustrating some operations of the network shown in Figure 3, and
   Figure 5 is a sequence diagram illustrating some operations of a similar network according to a second embodiment of the present invention.

### Detailed Description

When considering a known system, the inventors realised that selection of which assets to download and store on streaming nodes could be made automatically dependent upon numbers of requests received.

### Media-on-Demand Network

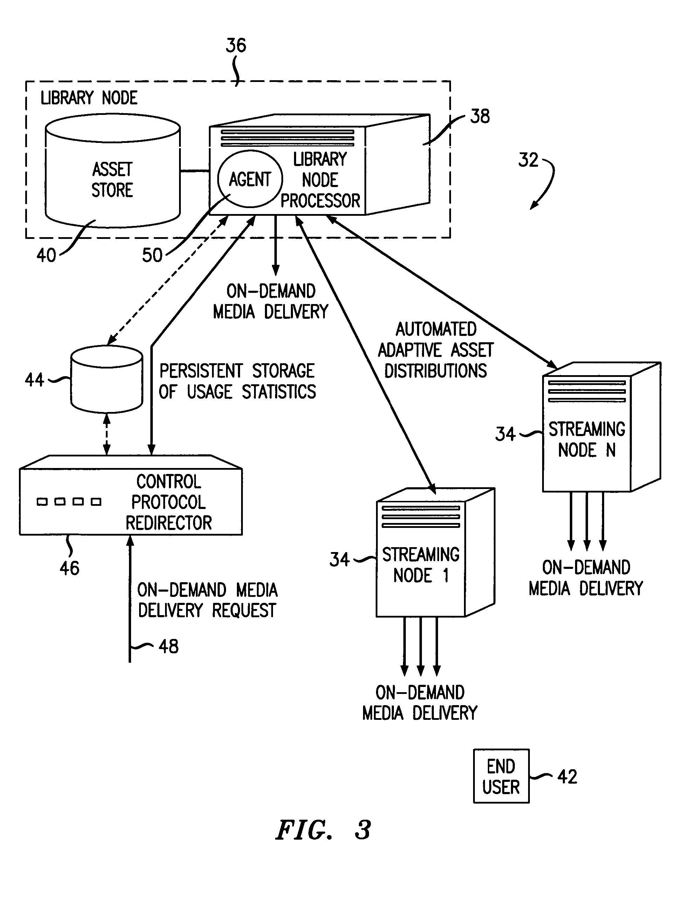

As shown in Figure 3, a media-on demand delivery network 32 consists of local media delivery nodes, denoted streaming nodes 34, connected to a central library node 36 which includes a processor 38 and a database 40 of media assets such as films in digital format. For simplicity only one library node 36 and a two streaming nodes 34 are shown in Figure 3. In this example, the media is video.

The library node 36 is typically not located close to end users, and there are fewer library nodes 36 than streaming nodes 34. The library node 36 primarily acts to distribute assets to streaming nodes, but also, secondarily, itself serves some media-on-demand requests from users. The processor 38 is for handling the media assets stored in the database 40.

The streaming node 34 is a node that serves requests for media-on-demand. The streaming node 34 includes a media store of a size that cannot store all media assets on offer to end users, but can store some of those media assets. One end user terminal 42 is shown in Figure 3 for simplicity. Each streaming node 34 is usually located geographically close to end users, and is considered the preferred streaming node for nearby users. An individual streaming node cannot itself hold all of the media assets available in the library node.

The network also includes a persistent storage 44, namely a Remote Data Base Management System, RDBMS, that is connected to the processor 38. The persistent storage stores usage statistics, namely observed popularity information (for example number of requests per time interval for each media asset over a longer time window).(The time interval is set dependent upon media type).

There is a control protocol redirector 46 connected to the persistent storage 44 and the library node processor 38. The control protocol redirector 46 is the initial access and control point for media-on-demand requests 48 from users.

The library node processor 38 includes a distribution agent 50 operative to estimate future popularity of a media asset dependent upon observed popularity data from the persistent storage 44 and to decide whether to download that asset to a streaming node 34 in consequence.

### Operation

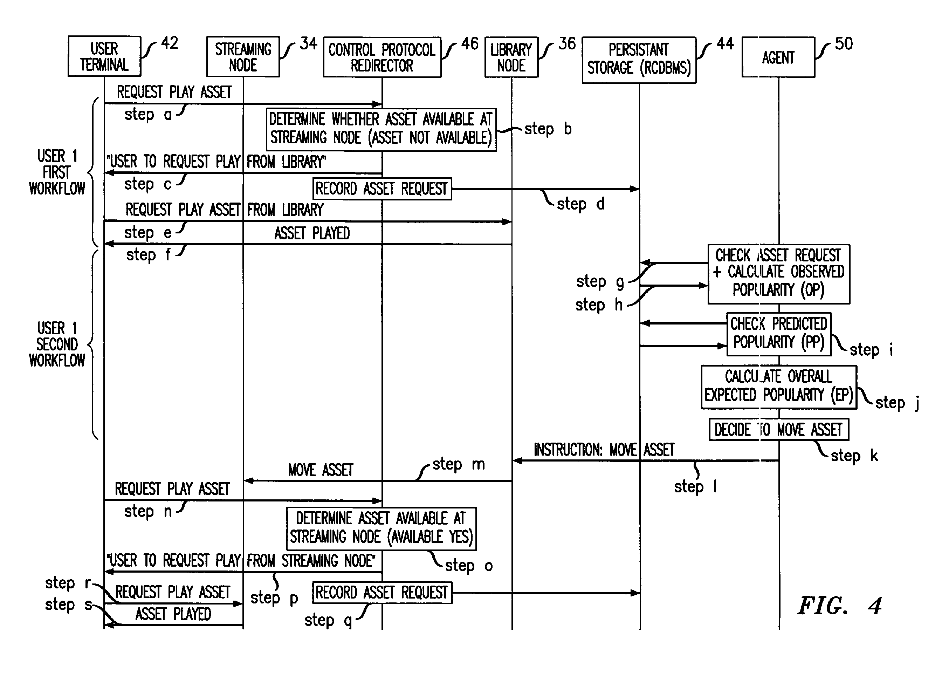

As shown in Figure 4, for a first user terminal 42 the sequence of messages can be considered as a first messaging flow followed by a second messaging flow.

The first messaging flow is as follows:

The user 42 sends (step a) a request to play the asset to the control protocol redirector 46.

The control protocol redirector 46 determines (step b) whether the requested asset is available at the streaming node. In the case, the requested asset is not available, so a message is sent (step c) to the user indicating that the user is instead to request that the asset be provided from the library node 36.

The control protocol redirector 46 stores (step d) a record of the asset having been requested in the persistent storage 44.

The user 42 then sends (step e) a request to the library node 36 to play the asset, in other words, provide the asset to the user 42 from the library node 36.

The library node 36 responds by playing (step f) the asset, in other words providing the asset to the user terminal, as video stream portions via the preferred streaming node 34 for that user, but without recording the whole asset in the streaming node 34.

There then follows what can be considered the second messaging flow as follows. In this example, the distribution agent 50 checks (step g) the asset request records, i.e. usage statistics (e.g. number of requests for which film and when those requests were made), at the persistent storage 44, and uses the data collected (step h) from the persistent storage to calculate the observed popularity, OP, for various assets. The lowering observed popularity of an asset is damped to prevent a previously very popular asset too suddenly being considered unpopular, to the disadvantage of those users still wanting to receive that asset. A good example is an important news or sports event that is desirable to keep available at the streaming node for longer than other assets, such as feature films, having the same request pattern. Such damping follows *OP = y(OP_{NOW-K}, OP_{NOW-K+1}, OP_{NOW-1}, OP_{NOW}),* where K denotes previously observed popularity *K* time intervals in the past and *y()* denotes a predetermined function.

The distribution agent 50 also checks (step i) the predicted popularity, PP, pre-stored in the persistent storage for the asset requested. In this embodiment, the predicted popularity is a measure of how successful the asset, such as a film, was in cinemas, for example as measured by box office takings per week or per day.

The distribution agent calculates (step j) an overall expected popularity EP from the observed popularity OP and predicted popularity PP. EP is a predetermined function of OP and PP.

In this example implementation, expected popularity EP is calculated as follows:
For an existing asset of lowering popularity (OP_{*NOW*-1}> OP_{NOW}), EP = ½( OP_{*NOW*-1}+OP_{NOW}).
For a new asset of lowering popularity (PP_{*NOw*-1}*>* OP_{NOW}), EP = ½( PP_{*NOw-*1}+OP_{NOW}).
For an existing asset of rising popularity (OP_{*NOW*-1}*<* OP_{NOW}), EP = OP_{NOW}.
For a new asset of rising popularity (PP_{*NOW*-1}< OP_{NOW}), EP = OP_{NOW}.

The agent 50 decides(step k), dependent upon whether the EP value exceeds a predetermined threshold, whether to store the asset at the streaming node 34 for use in addressing subsequent requests for that asset; and if so instructs (step *l*) the library node 36 to download the asset to the streaming node 34 for storage therein. The library node 36 downloads (step m) the asset to the streaming node 34 where it is stored for use in providing the asset to further users requesting the asset. If necessary, a lower expected popularity (EP) asset that was previously stored in the streaming node 34 is removed to make space.

As shown in Figure 4, a further request is received (step n) by the control protocol redirector 46 from the user 42 (or another user in the coverage area of the streaming node 34) for that asset. The control protocol redirector 46 determines (step o) that the asset is available at the streaming node 34, so sends (step p) an instruction to the user 42 to request the asset from the streaming node 34.

The control protocol redirector 46 stores (step q) a record of the asset having been requested in the persistent storage 44.

The user 42 then sends (step r) a request to the streaming node 34 to play the asset, in other words, provide the asset to the user 42 from the streaming node 34.

The streaming node 34 responds by playing (step s) the asset, in other words providing the asset to the user terminal.

It will be appreciated that, in consequence, less popular assets are provided to the user from the library node whilst more popular assets are additionally stored downstream at the streaming node for easier download to a user in response to a further request for that asset from a user near the streaming node. This process is automatic, and is self-adaptive as asset popularity changes. It can be considered that storage of the asset is shifted to those streaming nodes selected as being from which that asset is sufficiently likely to be requested. This enables many asset requests to be served at a time.

Should a streaming node go out of service, the network self-adapts in that assets determined as sufficiently popular are instead moved to neighbouring streaming nodes so to meet demand of nearby users.

### An example embodiment involving user profiling

Another embodiment is essentially as described above save that an additional component is included in calculating expected probability EP. That additional component is a probability factor due to user profiling.

A particular asset is unlikely to be equally popular at all streaming nodes and user profiling addresses this. For example, if the streaming node is in a coverage area having a high proportion of students in its population, action films may be considered more desirable. If the streaming node is at a retirement centre, history programs may be favoured. This is addressed by including in the calculation of expected probability, EP, (step j in Figure 4) an additional probability factor denoted user probability, UP. Accordingly expected probability EP is a function of OP,PP and UP.

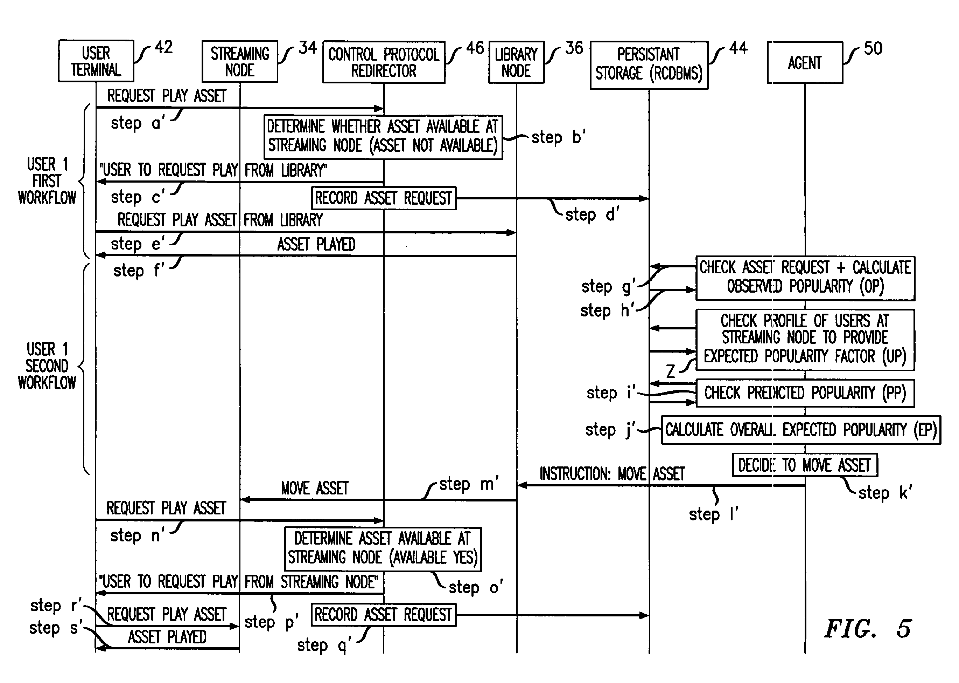

As shown in Figure 5, this is done by the distribution agent additionally checking (step z) the profile of users of the streaming node that is stored in the persistent storage.

The user probability UP depends on at least one of age profile, gender profile, and sample population questionnaire results.

By way of example, a user probability can be applied as a weight coefficient applied to the predicted probability. For example EP = *f(OP,wₖ*×*PP),* where *wₖ* is a weigh coefficient for the particular gender typically *wₖ* is between 0 and 1, for example a romantic comedy film being given a weight factor of 0.6 in a largely female area, but a lower factor (such as 0.4) where there is a more male population.

For completeness, a more complete description of the operation of this second example network is as follows: As shown in Figure 5, for a first user terminal 42 the sequence of messages can be considered as a first messaging flow followed by a second messaging flow. The first messaging flow is as follows: The user 42 sends (step a') a request to play the asset to the control protocol redirector 46.

The control protocol redirector 46 determines (step b') whether the requested asset is available at the streaming node. In the case, the requested asset is not available, so a message is sent (step c') to the user indicating that the user is instead to request that the asset be provided from the library node 36.

The control protocol redirector 46 stores (step d') a record of the asset having been requested in the persistent storage 44.

The user 42 then sends (step e') a request to the library node 36 to play the asset, in other words, provide the asset to the user 42 from the library node 36.

The library node 36 responds by playing (step f') the asset, in other words providing the asset to the user terminal, as video stream portions via the preferred streaming node 34 for that user, but without recording the whole asset in the streaming node 34.

There then follows what can be considered the second messaging flow as follows. The distribution agent 50 checks (step g') the asset request records, i.e. usage statistics (e.g. number of requests for which film and when those requests were made), at the persistent storage 44, and uses the data collected (step h') from the persistent storage to calculate the observed popularity, OP, for various assets.

As shown in Figure 5, the distribution agent 50 additionally checks (step z) the profile of users of the streaming node that is stored in the persistent storage 44. so as to provide a factor dependent upon an aspect of user profile, for example gender balance.

The distribution agent 50 also checks (step i') the predicted popularity, PP, pre-stored in the persistent storage for the asset requested. In this embodiment, the predicted popularity is a measure of how successful the asset, such as a film, was in cinemas, for example as measured by box office takings per week or per day.

The distribution agent calculates (step j') an overall expected popularity EP from the observed popularity OP, predicted popularity PP and user probability. EP is a predetermined function of OP, PP and UP.

The agent 50 decides(step k'), dependent upon whether the EP value exceeds a predetermined threshold, whether to store the asset at the streaming node 34 for use in addressing subsequent requests for that asset; and if so instructs (step *l*') the library node 36 to download the asset to the streaming node 34 for storage therein. The library node 36 downloads (step m') the asset to the streaming node 34 where it is stored for use in providing the asset to further users requesting the asset. If necessary, a lower expected popularity (EP) asset that was previously stored in the streaming node 34 is removed to make space.

As shown in Figure 5, a further request is received (step n') by the control protocol redirector 46 from the user 42 (or another user in the coverage area of the streaming node 34) for that asset. The control protocol redirector 46 determines (step o') that the asset is available at the streaming node 34, so sends (step p) an instruction to the user 42 to request the asset from the streaming node 34.

The control protocol redirector 46 stores (step q') a record of the asset having been requested in the persistent storage 44.

The user 42 then sends (step r') a request to the streaming node 34 to play the asset, in other words, provide the asset to the user 42 from the streaming node 34.

The streaming node 34 responds by playing (step s') the asset, in other words providing the asset to the user terminal.

### Example embodiments involving importance of asset

Another example embodiment is essentially as described above save a further variable is considered in determining expected probability, EP, namely priority, PR. For example video of a major global news event may be assigned a high priority, in the sense of having a high importance. Expected probability is then a function of OP, PP, and PR, and in some embodiments UP also.

By way of example, a priority probability component can be applied as a weight coefficient. For example EP *=zₖ f(OP*,*PP),* where *zₖ* is a weight coefficient for importance typically *wₖ* is between O and 1.

### Some further options

In some, otherwise similar, embodiments, predicted popularity, PP, is adjusted when there is an additional promotion, e.g. discount voucher's for a new children's film in the school holidays.

In some alternative embodiments, the library node is replaced by a hierarchy of library nodes.

### General

The present invention may be embodied in other specific forms without departing from its spirit or essential characteristics. For example, in some embodiments other types of media or multimedia than video, for example digital media such as audio, ring tones, clips, pictures, slide shows, can be provided in addition or instead. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

## Claims

1. A method of storing a media asset in a streaming node (34) of a media-on-demand network comprising a library node (36) and at least one downstream streaming node, the method comprising:
recording data of the number of requests from users for an asset over a time period;
determining a popularity estimate (EP ) for the asset dependent upon the recorded data;
determining whether the popularity estimate exceeds a predetermined threshold; and
upon the threshold being exceeded storing the asset in the streaming node for use in addressing a further request for the asset.

2. A method according to claim 1, in which the determination of the popularity estimate includes an adjustment dependent upon a previously determined estimate (PP) of popularity for the asset.

3. A method according to claim 2, in which the previously determined estimate is derived from cinema box office ticket sales statistics.

4. A method according to any preceding claim, in which the determination of the popularity estimate includes an adjustment (UP) dependent on at least one aspect of the demography of the user population of the streaming node.

5. A method according to claim 4, in which said factor depends on gender balance.

6. A method according to any preceding claim, in which the determination of the popularity estimate includes an adjustment (PR) dependent upon the estimated informational importance of the asset.

7. A method according to any preceding claim in which the popularity estimate is updated periodically, each time a further determination being made whether the threshold is exceeded and if so, the asset being stored in the streaming node.

8. A media-on-demand network comprising a streaming node (34), and a library node (36), a memory (44) and a processor (50),
the library node (36) being operative to provide a media asset to the streaming node;
the memory (44) being operative to record data of the number of requests from users for the asset over a time period;
the processor (50) being operative to determine a popularity estimate (EP) for the asset dependent upon the recorded data and to determine whether the determined popularity estimate exceeds a predetermined threshold,
the streaming node (34) being operative, upon the threshold being determined by the processor as exceeded, to store the asset for use in addressing further requests from users for the asset.

9. A media-on-demand network according to claim 8, in which the processor (50) comprises a media asset distribution initiation agent.

10. A media-on-demand network according to claim 8 or claim 9, in which the processor is operative to determine the popularity estimate by additionally taking account of a previously determined estimate (PP) of popularity.

11. A media-on-demand network according to any of claims 8 to 10, in which the processor is operative to determine the popularity estimate by taking account of a variable (UP) dependent on at least one aspect of the demography of the user population of the streaming node.

12. A media-on-demand network according to any of claims 8 to 11, in which the processor is operative to determine the popularity estimate by additionally taking account of a variable (PR) dependent upon the estimated informational importance of the asset.

13. A media-on-demand network according to any of claims 8 to 12, in which the network includes a controller (46) operative to process an asset request from a user including determining whether the asset is stored in the streaming node.

14. A media-on-demand network according to any of claims 8 to 13, in which in use, from time to time, the popularity estimate is updated, and a fresh determination is then made whether to store the asset in the streaming node.
